Europäisches Patentamt

**European Patent Office**

**Office européen des brevets**

(11) Numéro de publication : **0 038 744**
**B1**

(12) **FASCICULE DE BREVET EUROPÉEN**

(45) Date de publication du fascicule du brevet :
11.12.85

(21) Numéro de dépôt : **81400581.5**

(22) Date de dépôt : **10.04.81**

(51) Int. Cl.⁴ : **H 02 K   1/14, H 02 K 21/18,**
**H 02 K 37/00, G 04 C 13/11**

(54) **Moteur pas à pas notamment pour montre électronique.**

(30) Priorité : **18.04.80 FR 8008807**

(43) Date de publication de la demande :
**28.10.81 Bulletin 81/43**

(45) Mention de la délivrance du brevet :
**11.12.85 Bulletin 85/50**

(84) Etats contractants désignés :
**CH DE LI**

(56) Documents cités :
**FR-A-   972 469**
**FR-A- 2 227 570**
**US-A- 3 984 972**

(73) Titulaire : **CENTRE TECHNIQUE DE L'INDUSTRIE**
**HORLOGERIE "CETEHOR"**
**39, avenue de l'Observatoire**
**F-25003 BESANCON (FR)**

(72) Inventeur : **Chatelain, Jean-Claude**
**Chemin du Cerisier AVANNE**
**F-25720 Beure (FR)**

(74) Mandataire : **Weinstein, Zinovi et al**
**Cabinet Z. WEINSTEIN 20, Avenue de Friedland**
**F-75008 Paris (FR)**

Jouve, 18, rue St-Denis, 75001 Paris, France

## Description

La présente invention se rapporte à un moteur pas à pas notamment pour montre électronique, comprenant une bobine d'excitation associée au stator, un stator dont les deux extrémités libres recourbées l'une vers l'autre forment respectivement deux pièces polaires délimitant entre elles un entrefer dans lequel est logé le rotor du moteur, qui comprend un aimant permanent, l'extrémité libre de chaque pièce polaire possédant un évidemment de forme sensiblement cylindrique tel que l'axe du cylindre soit parallèle à l'axe de rotation du rotor, les deux axes des deux cylindres présentant un décalage l'un par rapport à l'autre dans une direction perpendiculaire au plan défini par l'axe de rotation du rotor et la direction principale du flux généré par la bobine circulant dans l'entrefer.

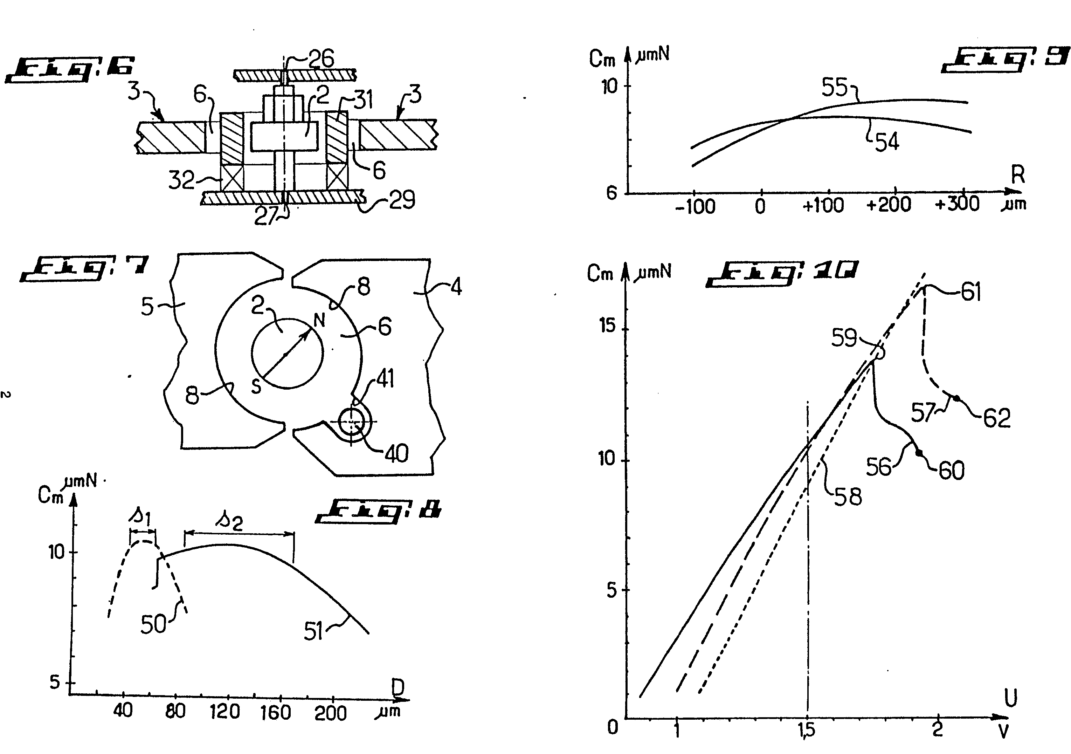

Un moteur de ce type est décrit dans le brevet US 3 984 972. Dans ce document on examine le rapport entre le décalage et des rapports des rayons du rotor et du stator. Ainsi, on indique qu'il est possible d'obtenir un couple moteur donné lorsque l'on choisi pour un rapport de rayon donné un décalage approprié. Mais, il ressort de la figure 4 de ce document comme du texte descriptif se référant à cette figure, que cette possibilité n'existe qu'à l'intérieur d'une gamme de rapports de rayon, comprise entre 0,6 et 0,9. Il est précisé qu'en-dessous de la valeur 0,6, le moteur ne peut plus fonctionner. De plus, la figure 4 de l'antériorité ne précise par l'unité dans laquelle le décalage est mesuré. On note simplement une échelle de 1-6. Cependant, les moteurs du type décrit dans ce brevet sont des moteurs du type « LAVET ». Dans les moteurs de ce type, chaque pièce polaire est excentrée par rapport à l'axe de rotation du rotor de 20 à 25 $\mu$ (20 à 25.10$^{-6}$ m), ce qui signifie une excentricité totale de 50 $\mu$.

Les moteurs connus de ce type, ont pour inconvénient qu'en raison des faibles décalages ou excentricités admises inférieures à 50 $\mu$ qu'ils ne peuvent pas être fabriqués en grande série. En effet, les tolérances de fabrication et de positionnement des évidements du stator, du moteur connu, qui sont imposées pour assurer un bon fonctionnement du moteur, sont incompatibles avec les précisions qui sont habituellement obtenues avec des moyens ordinaires de production de masse.

La présente invention a donc pour objectif de proposer un moteur pas à pas qui permet une fabrication en grande série.

Pour atteindre ce but, le moteur selon l'invention est caractérisé en ce qu'il comporte, pour des rayons du rotor de l'ordre de 0,8 mm, un rapport du rayon du rotor et du rayon de l'évidement du stator d'une valeur comprise entre 0,5 à 0,59 de façon que le moteur puisse fonctionner normalement dans une gamme de valeur pour ledit décalage entre 1/20ème à 1/8ème du diamètre de l'aimant du rotor, et que le couple moteur reste sensiblement constant malgré une variation importante du décalage pour permettre de grandes tolérances de fabrication et de montage des pièces précitées de la montre.

Ainsi, la présente invention propose un moteur qui fonctionne avec un rapport des valeurs des rayons du rotor et du stator de l'ordre de 0,5 à 0,59, c'est-à-dire à l'extérieur de la gamme de valeur de 0,6 à 0,9 considérée comme utilisable. La particularité de l'invention vis-à-vis d'un moteur du type décrit dans le brevet US est le résultat de considérations diamétralement opposées à celles qui ont abouti au moteur connu. L'invention est basée sur le problème consistant à obtenir un flux magnétique suffisant pour assurer la rotation du moteur en donnant une valeur appropriée au rayon de l'aimant du rotor. En maintenant constante la valeur du rotor on a modifié le rapport des rayons par modification du seul rayon du stator. Or, le moteur du brevet US est basé sur la démarche inverse. On modifiait le rayon du rotor et maintenait constant le rayon du stator. Ceci explique que le moteur connu ne peut plus fonctionner lorsque le rapport des rayons est inférieur à 0,6. En effet, le rayon du rotor est trop petit pour assurer un flux magnétique suffisant.

Par conséquent l'invention est basée sur des considérations fondamentalement opposées à l'enseignement du brevet US-A-3 984 972.

Selon une disposition avantageuse de l'invention, les axes des deux évidements, habituellement dans un plan perpendiculaire au plan précité, peuvent être écartés l'un de l'autre d'une valeur comprise entre 80 $\mu$ et 400 $\mu$ ou 1/20ème au 1/4ème du diamètre de l'aimant du rotor dans une direction parallèle audit plan.

Selon une autre disposition de l'invention, l'axe de rotation du rotor peut être positionné en tout point d'une aire perpendiculaire audit axe délimité par un cercle de rayons d'une valeur de 200 $\mu$ ou 1/8ème du diamètre de l'aimant du rotor au milieu du segment joignant les deux axes des deux évidements dans un plan perpendiculaire à ces deux axes.

Selon encore une autre disposition de l'invention, le rapport entre l'entrefer moyen et le rayon de l'aimant du rotor a une valeur comprise entre 0,7 et 1.

Selon une autre disposition avantageuse de l'invention, au moins une pièce polaire peut se déplacer par rapport à l'autre, dans un sens ou dans l'autre, dans un plan perpendiculaire à l'axe de rotation du rotor, dans le but d'une mise à l'heure électronique.

Un tel moteur appliqué à une montre électronique présente de nombreux avantages tels que notamment :

— un couple moteur sensiblement constant lors d'une variation relativement importante du décalage entre les deux axes des évidements des pièces polaires, ce qui n'était pas obtenu dans l'art antérieur ;

— de même pour le recul, on obtient de très grandes tolérances de fabrication ;

— tous les paramètres intervenant dans la région de l'entrefer sont moins critiques avec un grand entrefer relatif, en particulier, le diamètre de l'aimant, l'épaisseur de l'aimant, le BH max de l'aimant, le mal rond ou mal plat de l'aimant sur son axe, la position des paliers du rotor par rapport au stator, la précision sur la position des pièces polaires, la finition des surfaces polaires, l'extrémité des pièces polaires moins influentes quant à leur précision et leur symétrie, le self de la bobine du stator moins influencée dans ses variations en fabrication, car la reluctance du circuit magnétique vu de la bobine est moins perturbée par les écarts dimensionnels des formes intérieures des stators, l'entrefer étant relativement grand ;

— on peut loger dans l'entrefer des pièces ferro-magnétiques telles que par exemple l'axe d'un rouage de manière à diminuer au maximum l'entraxe du premier engrenage ;

— les discontinuités de couple moteur sont repoussées loin du point de fonctionnement du moteur tension environ 1,5 volts et largeur des impulsions (7,8 millisecondes) en utilisant un grand décalage et un grand recul ;

— pour un recul très supérieur à 250 μ, le rotor peut avoir deux modes de fonctionnement. Avec des impulsions d'environ 7,8 millisecondes, le rotor tourne dans un sens normal et n'a qu'un sens préférentiel, avec des impulsions plus brèves, il peut tourner dans les deux sens en vue d'une mise à l'heure électronique en marche arrière ;

— on peut encore arriver à ce résultat en déplaçant les pièces polaires du stator l'une par rapport à l'autre à l'aide d'un poussoir situé sur le boîtier de la montre ou du réveil.

D'autres avantages et caractéristiques de l'invention apparaîtront mieux dans la description détaillée qui suit et qui se réfère aux dessins annexés, donnés uniquement à titre d'exemple et dont l'échelle des valeurs de décalage et de recul sont volontairement agrandies pour la compréhension, et dans lesquels :

La figure 1 est une vue en plan et de face d'un moteur pas à pas suivant l'invention.

La figure 2 est une vue partielle en plan et agrandie du moteur représenté sur la figure 1 définissant les décalages des axes des évidements des pièces polaires.

La figure 3 est une vue partielle en plan et agrandie du moteur représenté sur la figure 1, et montrant le décalage des axes des évidements des pièces polaires en position normale.

La figure 4 est une vue partielle en plan et agrandie du moteur représenté sur la figure 1 et montrant un décalage différent de celui représenté sur la figure 3.

Les figures 5 et 6 sont des coupes partielles suivant un plan passant par l'axe de rotation du rotor, montrant des possibilités de montage de pièces dans l'entrefer suivant l'invention.

La figure 7 est une vue partielle en plan et agrandie du moteur représenté sur la figure 1 montrant le passage d'un axe dans l'entrefer.

La figure 8 est une courbe représentative du couple moteur $C_m$ en fonction du décalage D des axes des évidements des pièces polaires.

La figure 9 est une courbe représentative du couple moteur $C_m$ en fonction du recul R des axes des évidements des pièces polaires ; et

la figure 10 est une courbe représentative du couple moteur $C_m$ en fonction de la tension U.

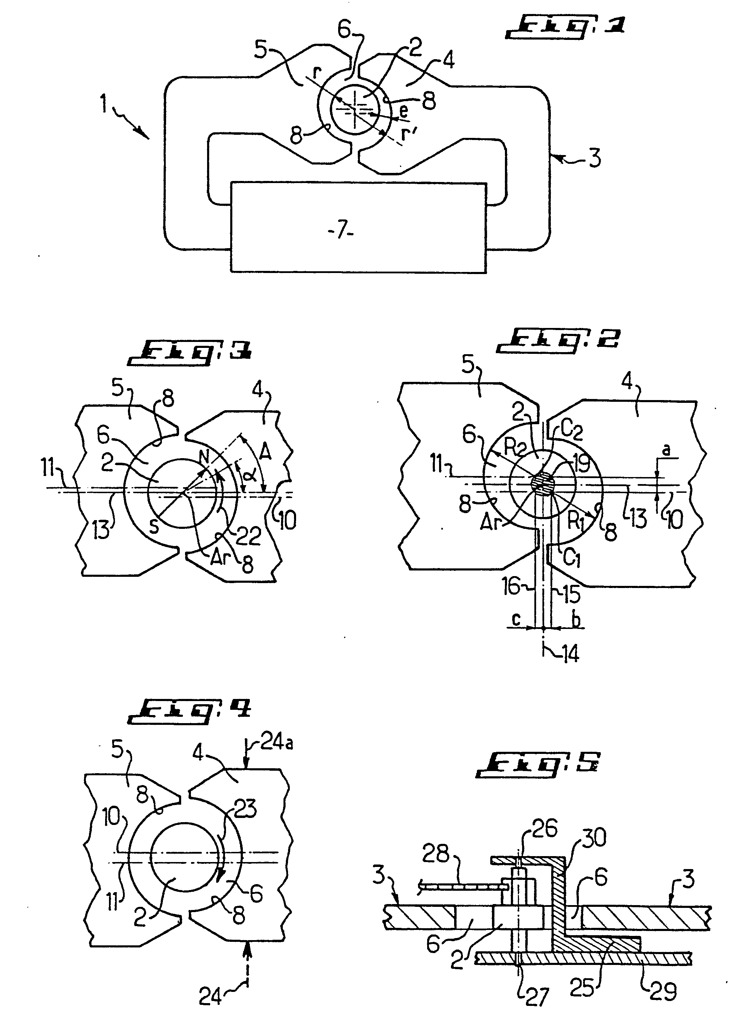

Suivant un exemple de réalisation représenté sur la figure 1, un moteur 1 conforme à l'invention comprend essentiellement un rotor 2 aimanté de façon permanente, en matériau à perméabilité voisine de celle de l'air tel que le samarium-cobalt, la ferrite, le platine-cobalt ou analogue, et présentant au moins deux pôles, un stator 3 en matériau à haute perméabilité magnétique dont les deux extrémités libres recourbées l'une vers l'autre forment respectivement deux pièces polaires 4 et 5, délimitant entre elles un entrefer 6 dans lequel est logé le rotor 2 du moteur, une bobine 7 associée au stator 3 et recevant les impulsions électriques d'un circuit électronique non représenté.

La surface d'extrémité de chaque pièce polaire possède un évidement 8. Pour simplifier la description, on supposera que la forme de cet videment 8 est cylindrique et de rayon r′.

Comme cela apparaît plus clairement à la figure 2, les deux pièces polaires 4 et 5 sont décalées l'une par rapport à l'autre. De façon plus générale, sans sortir du cadre de l'invention, on prendra comme évidement 8 de la pièce polaire 4 une portion de cercle de rayon $R_1$ et de centre $C_1$, et comme évidement 8 de la pièce polaire 5, une portion de cercle de rayon $R_2$ et de centre $C_2$. Les valeurs des rayons $R_1$ et $R_2$ peuvent être différentes ou sensiblement égales.

Comme le montre la figure 2, l'axe 10 de l'évidement de la pièce polaire 4 est décalé d'une valeur représentée par a par rapport à l'axe 11 de l'évidement de la pièce polaire 5, ceci dans un plan perpendiculaire à l'axe de rotation du rotor 2 matérialisé par le centre $A_r$. Pour un aimant de rotor 2 ayant un rayon de l'ordre d'environ 0,8 mm ou 800 μ et l'évidement du stator 3 ayant un rayon de l'ordre d'environ 1,5 mm ou 1500 μ, ce décalage peut avoir une valeur comprise entre 80 μ et 200 μ. Exprimé par son rapport au diamètre de l'aimant du rotor, ce décalage à une valeur comprise entre 1/20ème et 1/8ème du diamètre de l'aimant. Par rapport au diamètre de l'évidement du stator, on obtient pour ce décalage une valeur comprise entre 1/14ème et 1/40ème du diamètre du stator. Il est à noter que la largeur moyenne de l'entrefer est de l'ordre d'environ 0,7 mm ou 700 μ. La largeur moyenne est définie par la différence entre le rayon du stator et le rayon du rotor. Elle est donc égale à r′-r suivant la figure 1.

Il est à noter que si le décalage est effectué sur une seule des deux pièces polaires, par exemple la pièce polaire 4 dont le centre $C_1$ de l'évidement 8 serait centré sur l'axe 13 du rotor 2, l'axe 13 matérialisant le plan (P) précité, la pièce polaire 5 serait excentrée de la valeur a par rapport à l'axe 13, le résultat obtenu est comparable à un système totalement symétrique et axé sur l'axe 13 du rotor 2 suivant le schéma représenté par la figure 2, car c'est la position relative des deux pièces polaires 4 et 5 du stator 3 entre elles qui est importante et non leur position par rapport à l'axe 13 du rotor 2.

D'autre part, ce décalage sera d'autant plus grand que les diamètres des évidements et de l'aimant du rotor seront grands, que le rapport entre l'entrefer moyen et le diamètre de l'aimant du rotor sera grand, que le couple moteur désiré sera grand, que le BH max de l'aimant sera faible, que le flux de la bobine sera grand, que le rendement du moteur sera faible, et que la consommation électrique du moteur pour un pas sera grande.

Sur cette figure 2, les évidements 8 des pièces polaires 4 et 5 sont représentés par des portions de cercle respectivement de centre $C_1$ et de rayon $R_1$ et de centre $C_2$ et de rayon $R_2$, ceci étant figuré dans un plan perpendiculaire à l'axe de rotation $A_r$ du rotor 2. Les centres $C_1$ et $C_2$ normalement situés sur l'axe 14 sont respectivement écartés par rapport à cet axe 14 matérialisant le plan perpendiculaire au plan (P) défini par l'axe de rotation $A_r$ du rotor 2 et la direction principale du flux 13 généré par la bobine 7 circulant dans l'entrefer 6, d'un espace b et c, la valeur de l'écartement des deux centres étant comprise entre 80 μ et 400 μ ou 1/20ème et 1/4ème du diamètre de l'aimant du rotor. Cet écartement est encore appelé recul $(R = b + c)$.

Il est aussi à noter que c'est la position respective des deux pièces polaires 4 et 5 du stator 3 qui influence les caractéristiques du moteur 1. Ainsi, la figure 2 montre un recul symétrique de chaque pièce polaire 4 et 5 par rapport à l'axe 14, mais ce recul peut être reporté sur une seule pièce polaire par exemple 4, l'autre pièce polaire 5 n'étant pas reculée par rapport au plan passant par l'axe 14 du rotor 2 et perpendiculaire à l'axe 11. En d'autres termes, le centre $C_1$ du cercle de l'évidement 8 de la pièce polaire 4 peut être écartée par rapport au plan passant par l'axe de rotation $A_r$ du rotor 2 et perpendiculaire à l'axe 10 de la pièce polaire 4 de la somme des deux espaces b et c, suivant la direction de l'axe 10 de la pièce polaire 4 ; le centre $C_2$ du cercle de l'évidement 8 de la pièce polaire 5 restant axé sur l'axe 14 matérialisant le plan passant par l'axe de rotation $A_r$ du rotor 2 et perpendiculaire à la direction principale du flux généré par la bobine 7 et circulant dans l'entrefer 6.

Sur la figure 2 il est aussi indiqué l'aire 19 dans laquelle l'axe de rotation $A_r$ du rotor 2 peut être positionné. Cette aire 19 est délimitée par un cercle de rayon d'une valeur de 200 μ et dont le centre est situé au milieu du segment $C_1$-$C_2$, dans le plan de la figure 2, c'est-à-dire un plan perpendiculaire à l'axe de rotation $A_r$ du rotor 2. Les figures 3 et 4 illustrent l'inversion du sens de rotation du rotor 2, en inversant le décalage des axes 10 et 11, respectivement des pièces polaires 4 et 5. Lorsque l'axe 11 de la pièce polaire 5 est positionné au-dessus de l'axe 10 de la pièce polaire 4, le sens de rotation 22 du rotor 2 est celui inverse des aiguilles d'une montre. Lorsque l'axe 11 de la pièce polaire 5 est situé au-dessous de l'axe 10 de la pièce polaire 4, le sens de rotation 23 du rotor 2 est celui des aiguilles d'une montre (figure 4). Ce décalage peut être avantageusement réalisé au moyen de poussoirs repérés schématiquement 24 et $24_a$ sur le boîtier d'une montre ou d'un réveil. Ceci permet d'effectuer une mise à l'heure.

D'autre part, la figure 3 montre l'angle A représentant la phase du couple d'indexage par rapport à l'axe 13, le couple d'indexage étant dû à la variation de reluctance du circuit magnétique de l'aimant du rotor 2, la bobine 7 n'étant pas alimentée en courant. Il est aussi représenté la valeur angulaire allant de 0° à 360° indiquant la position du rotor 2, lors de sa rotation.

D'autre part, compte tenu des valeurs relativement importantes du décalage des axes des évidements des pièces plaires, du recul, et de l'entrefer, il devient possible de loger dans l'espace de l'entrefer, une ou plusieurs pièces, comme cela va être décrit ci-après.

Sur la figure 5, il est montré une lanterne 25 servant à positionner au moins un palier 26 du rotor 2, l'autre palier 27 étant supporté par une plaque support 29 sur laquelle est fixée également la lanterne 25. Cette lanterne 25 comporte une partie centrale verticale 30 qui passe dans l'entrefer 6 formé par le stator 3 et le rotor 2. Le repère 28 indique un rouage associé au rotor 2.

Sur la figure 6, il est montré un frein de Foucault consitué d'une bague massive 31 entièrement circulaire ou non pour mieux amortir les mouvements du rotor 2 en fin de pas. Cette bague massive 31 en matériau très conducteur, par exemple du cuivre, est logée dans l'entrefer 6 entre le rotor 2 et le stator 3. Cette bague prend appui sur une plaque support 29 par l'intermédiaire de cales 32.

Sur la figure 7 il a été représenté le passage d'un axe de rouage 40 entre le rotor 2 et le stator 3. L'axe de rouage 40 traverse la pièce polaire 4 dans une encoche 41 débouchant dans l'entrefer et ceci sans perturber le fonctionnement du moteur 1.

Il est à noter que l'axe de rouage ou toute autre pièce peut être en matériau ferro-magnétique et peut être totalement indépendant du fonctionnement électro-magnétique du moteur. La position de cet axe de rouage diminue au maximum l'entraxe du premier engrenage, ce qui permet de réduire les dimensions d'une montre.

Les figures 8 et 9 représentent respectivement le couple moteur $C_m$ en fonction du décalage D des axes 10 et 11 des évidements des pièces polaires 4 et 5, et le couple moteur $C_m$ en fonction du recul R. Ce couple est mesuré sur l'aiguille des secondes.

Comme on le voit sur la figure 8, où les courbes sont établies pour un recul donné, à tension et à largeur d'impulsion électrique données, le

segment $s_1$ de la courbe 50 représente la zone utilisable pour un moteur dans l'état actuel de la technique, le segment $s_2$ sur la courbe 51 représente le segment utilisable pour un moteur suivant l'invention.

La figure 9 montre la courbe 55 pour un décalage minimal des axes 10 et 11 des évidements des pièces polaires 4 et 5, et la courbe 54 montre un décalage maximal des axes 10 et 11 des évidements des pièces polaires 4 et 5.

La figure 10 représente le couple moteur $C_m$ en fonction de la tension U pour des valeurs de décalage D différentes. La courbe 56 est réalisée avec un décalage de 80 μ, la courbe 57 est réalisée avec un décalage de 120 μ, la courbe 58 est réalisée avec un décalage de 160 μ.

Sur la courbe 56, le repère 59 représente la discontinuité du couple moteur $C_m$ en fonction de la tension U et le repère 60 représente la tension au-delà de laquelle le moteur ne fonctionne plus.

De même sur la courbe 57, le repère 61 représente la discontinuité du couple moteur $C_m$ en fonction de la tension U et le repère 62 représente la tension au-delà de laquelle, le moteur ne fonctionne plus.

On notera que plus le décalage est important, plus les points de discontinuité sont éloignés du point de fonctionnement (1,5 V). Il en est de même pour les courbes représentatives du couple moteur en fonction de la largeur d'impulsion.

Le fonctionnement du moteur est le suivant : Lorsqu'on applique des impulsions électriques alternées aux bornes de la bobine 7, on fait apparaître alternativement des pôles sud et des pôles nord dans les pièces polaires 4 et 5 du stator 3 qui repoussent les pôles sud et nord du rotor 2 alternativement suivant la polarité des impulsions. De ce fait, le rotor 2 effectue des rotations de 180° à chaque impulsion. Le fonctionnement d'un moteur étant connu en soi, il n'est pas nécessaire de décrire plus en détail son fonctionnement.

Une des conséquences supplémentaires de l'invention réside en ce que, compte tenu de l'entrefer relativement grand et de la possibilité de positionner l'axe de rotation du rotor en tout point de l'aire 19, si on excentre l'aimant de l'axe de rotation de façon à présenter un fort mal rond sur le rotor, et si l'on déplace l'axe de rotation dans une direction voisine de l'angle A de phase d'indexage précité, et d'une valeur voisine ou supérieure au mal rond du rotor, on peut envisager un moteur conforme à l'invention qui ferait un pas par tour (au lieu de deux) à condition de l'alimenter en impulsions uni-polaires à la place d'impulsions alternées comme précédemment.

On peut noter que le couple moteur ne varie pratiquement pas en fonction de la variation du décelage des axes 10 et 11 des évidements des pièces polaires 4 et 5 comme le montre la figure 8, ce qui permet d'obtenir une très grande tolérance sur le positionnement des pièces polaires 4 et 5 vis-à-vis des dispersions inévitables en fabrication. Ces tolérances sont de l'ordre de ± 10 μ.

Ceci s'explique de la façon suivante, suivant la figure 3, l'angle A représente la phase du couple d'indexage par rapport à l'axe 13. Le couple d'indexage est dû à la variation de reluctance du circuit magnétique de l'aimant du rotor 2, la bobine 7 n'étant pas alimentée en courant.

L'axe 13 représente l'axe du flux dû aux seuls ampères tours de la bobine 7.

L'angle A est compris entre 0° et 90°,
— au voisinage de 0° : le moteur ne fonctionne pas,
— au voisinage de 90° : le moteur est capable de tourner dans les deux sens.

Lorsque le décalage entre les axes 10 et 11 des évidements des pièces polaires 4 et 5 varie autour de la valeur choisie, le module du couple d'indexage varie aussi :
— si ce décalage diminue, cela entraîne un couple d'indexage plus faible, si inversement ce décalage augmente, le couple d'indexage deviendra plus grand.

En prenant des valeurs optimales d'entrefer, de décalage des axes 10 et 11 des évidements des pièces polaires 4 et 5, de recul, de position de l'axe $A_r$ du rotor 2, des caractéristiques de la bobine 7 et du rotor 2, il est possible de parvenir à faire varier automatiquement la phase A de l'indexage, lorsque le module du couple d'indexage change à la suite d'une dispersion de fabrication portant sur le décalage des axes 10 et 11 des évidements des pièces polaires 4 et 5.

L'explication en est la suivante : une variation du décalage des axes 10 et 11 des évidements des pièces polaires 4 et 5 autour de la valeur choisie, entraîne une modification en forme, amplitude et phase de la courbe de reluctance en fonction de l'angle α du circuit magnétique vu de l'aimant du rotor 2, qui se répercute par une modification de la courbe du couple d'indexage, en fonction de l'angle α au point de vue phase A, amplitude et forme.

L'angle A augmente en même temps que le module du couple d'indexage et que le décalage des axes 10 et 11 des évidements des pièces polaires 4 et 5 augmentent et inversement, l'angle A diminue en même temps que le module du couple d'indexage et que le décalage des axes 10 et 11 des évidements des pièces polaires 4 et 5 diminuent.

Ainsi, un moteur réalisé suivant la présente invention est peu sensible aux dispersions de fabrication portant sur le décalage des pièces polaires, car le couple moteur reste sensiblement constant dans une très large gamme de décalage comme le montre la figure 8.

On peut noter en outre que la combinaison d'un décalage entre les axes 10 et 11 des évidements des pièces polaires 4 et 5 et d'un recul relativement important, avec un entrefer également relativement important tel que le rapport de l'entrefer moyen et le rayon du rotor soit compris entre 0,7 et 1, entraîne une très grande tolérance de fabrication.

Les différents modes de réalisation du moteur conformes à l'invention représentés précédemment peuvent, non seulement s'appliquer à une montre, mais également à un réveil et de façon plus générale à l'industrie horlogère, et à tout mécanisme de précision incluant des moteurs pas à pas.

**Revendications**

1. Moteur pas à pas notamment pour montre électronique, comprenant une bobine d'excitation (7) associée au stator, un stator (3) dont les deux extrémités libres recourbées l'une vers l'autre forment respectivement deux pièces polaires (4, 5) délimitant entre elles un entrefer dans lequel est logé le rotor (2) du moteur, qui comprend un aimant permanent, l'extrémité libre de chaque pièce polaire (4, 5) possédant un évidement (8) de forme sensiblement cylindrique tel que l'axe du cylindre soit parallèle à l'axe de rotation du rotor, les deux axes des deux cylindres présentant un décalage l'un par rapport à l'autre dans une direction perpendiculaire au plan défini par l'axe de rotation du rotor et la direction principale du flux généré par la bobine (7) et circulant dans l'entrefer, caractérisé en ce qu'il comporte, pour des rayons du rotor (2) de l'ordre de 0,8 mm, un rapport du rayon du rotor (2) et du rayon de l'évidement (8) du stator d'une valeur comprise entre 0,5 à 0,59, la valeur dudit décalage étant comprise entre 1/20e à 1/8e du diamètre de l'aimant du rotor (2), le couple moteur restant sensiblement constant, ce qui permet des grandes tolérances de fabrication et de montage des pièces précitées de la montre.

2. Moteur pas à pas selon la revendication 1, caractérisé en ce que les rayons du rotor (2) et de l'évidement (8) du stator ayant respectivement une valeur de l'ordre de 0,8 et de 1,5 mm, le décalage précité des deux axes des deux cylindres est compris entre des valeurs telles que 80 μ et 200 μ.

3. Moteur pas à pas selon l'une des revendications 1 ou 2, caractérisé en ce que les axes des deux évidements (8) habituellement dans un plan perpendiculaire au plan (P) précité, peuvent être écartés l'une de l'autre d'une valeur comprise entre 80 μ et 400 μ ou 1/20e et 1/4e du diamètre de l'aimant du rotor (2), dans une direction parallèle au plan (P).

4. Moteur pas à pas selon la revendication 3, caractérisé en ce que la valeur précitée est de préférence comprise entre 150 μ et 300 μ ou 1/10e et 1/5e du diamètre de l'aimant du rotor.

5. Moteur pas à pas selon l'une des revendications 1 à 4, caractérisé en ce que l'axe de rotation du rotor (2) peut être positionné en tout point d'une aire (19) perpendiculaire audit axe délimitée par un cercle de rayon d'une valeur de 200 μ ou 1/8e du diamètre de l'aimant du rotor au milieu du segment joignant les deux axes des deux évidements dans un plan perpendiculaire à ces deux axes.

6. Moteur pas à pas selon l'une des revendications précédentes, caractérisé en ce que le rapport entre l'entrefer moyen et le rayon de l'aimant du rotor (2) a une valeur comprise entre 0,7 et 1.

7. Moteur pas à pas selon l'une des revendications précédentes, caractérisé en ce qu'au moins une pièce polaire (4, 5) peut se déplacer par rapport à l'autre, dans un sens ou dans l'autre, dans un plan perpendiculaire à l'axe de rotation du rotor, dans le but d'une mise à l'heure électronique.

8. Moteur pas à pas selon l'une des revendications précédentes, caractérisé en ce qu'il entraîne l'ensemble des équipements mobiles d'une montre.

9. Montre électronique, caractérisée en ce qu'elle comprend un moteur tel que défini selon l'une des revendications précédentes.

**Claims**

1. Step-by-step motor in particular for an electronic watch, comprising a field coil (7) associated with the stator, a stator (3) both free ends of which, bent towards each other, form two pole shoes (4, 5), respectively, defining an air-gap therebetween, in which is accommodated the rotor (2) of the motor which comprises a permanent magnet, the free end of each pole shoe (4, 5) having a recess (8) of substantially cylindrical shape such that the centre line axis of the cylinder be parallel to the axis of rotation of the rotor, both axes of both cylinders exhibiting an offset with respect to each other in a direction perpendicular to the plane defined by the axis of rotation of the rotor and the main direction of the flux generated by the coil (7) and flowing within the air-gap, characterized in that it comprises, for radii of the rotor (2) of the order of 0.8 mm, a ratio of the radius of the rotor (2) to the radius of the recess (8) of the stator of a value lying between 0.5 and 0.59, the value of said offset lying between 1/20th and 1/8th of the diameter of the magnet of the rotor (2), the drive torque remaining substantially constant, thereby permitting large manufacturing and mounting tolerances of said parts of the watch.

2. Step-by-step motor according to claim 1, characterized in that, with the radii of the rotor (2) and of the recess (8) of the stator respectively having values of the order of 0.8 and 1.5 mm, said offset of both axes of both cylinders is comprised between values such as 80 μ and 200 μ.

3. Step-by-step motor according to one of claims 1 or 2, characterized in that the axes of both recesses (8) usually in a plane perpendicular to said plane (P) may be spaced apart from each other by a value lying between 80 μ and 400 μ or between 1/20th and 1/4 of the diameter of the magnet of the rotor (2), in a direction parallel to the plane (P).

4. Step-by-step motor according to claim 3, characterized in that the aforesaid value is preferably comprised between 150 μ and 300 μ or between 1/10th and 1/5th of the diameter of the magnet of the rotor.

5. Step-by-step motor according to one of claims 1 to 4, characterized in that the axis of rotation of the rotor (2) may be positioned at any point of an area (19) perpendicular to said axis and defined by a circle with a radius of value of 200 µ or 1/8th of the diameter of the magnet of the rotor in the middle of the segment joining both axes of both recesses in a plane perpendicular to these two axes.

6. Step-by-step motor according to one of the foregoing claims, characterized in that the ratio between the mean air-gap and the radius of the magnet of the rotor (2) has a value lying between 0.7 and 1.

7. Step-by-step motor according to one of the foregoing claims, characterized in that at least one pole shoe (4, 5) is displaceable with respect to the other one in either direction within a plane perpendicular to the axis of rotation of the rotor for the purpose of an electronic setting.

8. Step-by-step motor according to one of the foregoing claims, characterized in that it drives the whole of the movable devices of a watch.

9. Electronic watch, characterized in that it comprises a motor such as defined according to one of the foregoing claims.

**Patentansprüche**

1. Schrittmotor insbesondere für eine elektronische Uhr, mit einer dem Stator zugeordneten Erregerspule (7), einem Stator (3) dessen beide freie gegeneinander umgebogene Enden jeweils zwei Polschuhe (4, 5) bilden, die zwischen sich einen Luftspalt, in welchem der einen Dauermagnet aufweisende Rotor (2) des Motors gelagert ist, begrenzen, wobei das freie Ende jedes Polschuhs (4, 5) eine Ausnehmung (8) im wesentlichen zylinderförmiger Gestalt aufweist, derart, dass die Achse des Zylinders zur Drehachse des Rotors parallel ist, wobei beide Achsen beider Zylinder eine Versetzung zueinander aufweisen in eine Richtung, die senkrecht zu der durch die Drehachse des Rotors und die Hauptrichtung des durch die Spule (7) erzeugten und in dem Luftspalt fliessenden Flusses bestimmten Ebene ist, dadurch gekennzeichnet, dass, bei Radien des Rotors (2) der Grössenordnung von 0,8 mm, er ein Verhältnis des Radius des Rotors (2) zum Radius der Ausnehmung (8) des Stators in einem zwischen 0,5 und 0,59 liegenden Wert aufweist, wobei der Wert der besagten Versetzung zwischen 1/20 und 1/8 des Durchmessers des Magnets des Rotors (2) liegt, wobei das Antriebsdrehmoment im wesentlichen konstant bleibt, wodurch grosse Herstellungs- und Einbautoleranzen der besagten Teile der Uhr gestattet werden.

2. Schrittmotor gemäss Anspruch 1, dadurch gekennzeichnet, dass die Radien des Rotors (2) und der Ausnehmung (8) des Stators jeweils einen Wert von ungefähr 0,8 und 1,5 mm haben und die besagte Versetzung beider Achsen der beiden Zylinder zwischen Werten wie 80 µ und 200 µ liegt.

3. Schrittmotor nach einem der Ansprüche 1 oder 2, dadurch gekennzeichnet, dass die üblicher Weise in einer senkrecht zur besagten Ebene (P) verlaufenden Ebene liegenden Achsen beider Ausnehmungen (8) in einem Abstand voneinander sein können, der einen zwischen 80 µ und 400 µ oder zwischen 1/20 und 1/4 des Durchmessers des Magnets des Rotors (2) in einer zur Ebene (P) parallelen Richtung liegenden Wert hat.

4. Schrittmotor nach Anspruch 3, dadurch gekennzeichnet, dass der besagte Wert vorzugsweise zwischen 150 µ und 300 µ oder zwischen 1/10 und 1/5 des Durchmessers des Magnets des Rotors liegt.

5. Schrittmotor nach einem der Ansprüche 1 bis 4, dadurch gekennzeichnet, dass die Drehachse des Rotors (2) an jedem Punkt einer Fläche (19) liegen kann, welche senkrecht zu der besagten Achse verläuft und durch einen Kreis mit einem Radius in einem Wert von 200 µ oder 1/8 des Durchmessers des Magnets des Rotors begrenzt wird und in der Mitte des die beiden Achsen beider Ausnehmungen in einer zu diesen beiden Achsen senkrecht verlaufenden Ebene verbindenden Segmentes liegt.

6. Schrittmotor nach einem der vorangehenden Ansprüche, dadurch gekennzeichnet, dass das Verhältnis zwischen dem Luftspaltmittelwert und dem Radius des Magnets des Rotors (2) einen zwischen 0,7 und 1 liegenden Wert aufweist.

7. Schrittmotor nach einem der vorangehenden Ansprüche, dadurch gekennzeichnet, dass wenigstens ein Polschuh (4, 5) sich in Bezug auf den anderen in einer oder der anderen Richtung, in einer senkrecht zur Drehachse der Rotors verlaufenden Ebene verschieben kann, zwecks eines elektronischen Stellens.

8. Schrittmotor nach einem der vorangehenden Ansprüche, dadurch gekennzeichnet, dass er die gesamten beweglichen Einrichtungen der Uhr antreibt.

9. Elektronische Uhr, dadurch gekennzeichnet, dass sie einen Motor wie in einem der vorangehenden Ansprüche bestimmt, aufweist.

Fig. 1

Fig. 3

Fig. 2

Fig. 4

Fig. 5

Fig.9

Fig.10

Fig.6

Fig.7

Fig.8